# DEMANDE DE BREVET EUROPEEN

(11) **EP 1 199 102 A1**
(43) Date de publication de la demande: **24.04.2002**
(21) Numéro de dépôt: 01402597.7
(22) Date de dépôt: 09.10.2001
(51) Int. Cl.: B01J 20/28, B01J 20/26

(54) **Comprime de superabsorbant et ses utilisations**

(30) Priorité: 18.10.2000 FR 0013314
(71) Demandeur: B. Braun Medical, 92106 Boulogne Cedex (FR)
(72) Inventeur: Roux, Florence, 64200 Biarritz (FR)
(74) Mandataire: Goulard, Sophie

(57) **Abrégé**

La présente invention se rapporte à un comprimé de superabsorbant apte à épaissir les excrétions corporelles (fèces, urine, ...) et à ses utilisations.

Ce comprimé est caractérisé en ce qu'il comprend un polymère superabsorbant pulvérulent ayant une masse volumique inférieure ou égale à 5.10² kg/m³ et ainsi qu'un temps de prise en gel inférieur à 6 secondes.

Utilisation : poches de recueil d'excrétions corporelles telles que poches de stomie ou de drainage, couches pour bébés, articles d'hygiène féminine.

## Description

La présente invention se rapporte à un comprimé de superabsorbant apte à épaissir les excrétions corporelles (fèces, urine, ...) et à ses utilisations, notamment dans des poches de recueil d'excrétions corporelles telles que poches de stomie ou de drainage.

Il a été proposé aux patients stomisés chez lesquels les matières excrétées par l'orifice stomacal sont liquides et de volume important - ce qui est notamment le cas des patients ayant subi une iléostomie - d'introduire, dans les poches qu'ils portent pour recueillir ces matières, un superabsorbant qui gonfle au contact de celles-ci et permet de les gélifier, ce qui a notamment pour effet de diminuer les risques de fuite des matières excrétées.

Ces patients utilisant le plus souvent des poches vidangeables, il leur est nécessaire d'introduire après chaque vidange une nouvelle quantité de superabsorbant et ce, par la sortie de vidange dont sont munies ces poches. Or, outre que cette sortie de vidange est constituée par deux parois en matière plastique solidarisées par leurs bords latéraux, qui sont de faible largeur (généralement de l'ordre de 55 à 65 mm) et qui tendent spontanément à s'accoler l'une à l'autre - ce qui rend souvent son ouverture relativement malaisée -, elle est susceptible d'être souillée par les matières excrétées. Comme un superabsorbant est, par nature, très sensible à l'humidité, il a tendance, lorsqu'il est sous forme de poudre, à former, dès qu'il est au contact des parois internes de la sortie de vidange, une pâte qui adhère à ces parois et qui empêche de le faire progresser vers la partie centrale de la poche.

Il importe donc que le superabsorbant se présente sous une forme qui permette, non seulement de l'introduire facilement dans la sortie de vidange, mais également de le faire glisser sans difficulté à l'intérieur de cette sortie de vidange de manière à ce qu'il puisse atteindre la partie centrale de la poche. Cependant, il est également essentiel que cette forme de présentation assure une libération du superabsorbant dès qu'elle se trouve au contact d'un liquide, ce qui n'est pas le cas de formes dans lesquelles le superabsorbant est retenu à l'intérieur d'une enveloppe comme par exemple une enveloppe de gélatine.

C'est ainsi qu'ont été proposés des comprimés de superabsorbant dans la Demande de Brevet Européen 0 138 427 et dans la Demande Internationale PCT WO 97/38740.

Ces comprimés ont en commun d'être obtenus par compression d'un mélange formé d'un superabsorbant se présentant sous la forme de particules, et d'un ou plusieurs excipients.

Ainsi, les comprimés décrits dans EP-A-0 138 427 comprennent de 25 à 75% en poids d'une charge, de préférence hydrophile comme de la silice ou de l'alumine fumée, un silicate d'aluminium, de la vermiculite ou encore une fibre élastique. Cette charge a pour fonction d'éviter que les particules de superabsorbant situées à la surface des comprimés ne forment, par gonflement au contact du liquide devant être absorbé, une gangue gélatineuse qui limite ensuite la pénétration de ce liquide à l'intérieur des comprimés et, par suite, bloque la capacité d'absorption du superabsorbant. Ce phénomène est connu sous l'expression anglo-saxonne *"gel blocking"*.

Les comprimés décrits dans WO-A-97/38740 comprennent, quant à eux, 20 à 40% en poids de cellulose microcristalline, de préférence en association avec 0,1 à 10% en poids d'un agent lubrifiant hydrophile. La cellulose microcristalline, qui a notamment pour caractéristique d'être hautement compressible, est destinée à compenser la faible compressibilité du superabsorbant de manière à ce qu'il se prête aux opérations de compression. Comme elle est, par ailleurs, très hydrophile, elle facilite la désintégration des comprimés au contact du liquide devant être absorbé et, partant, la libération des particules de superabsorbant dans ce liquide. Ainsi, par cette action désintégrante, la cellulose microcristalline contribue, elle aussi, à éviter la survenue d'un *"gel blocking"*. Quant à l'agent lubrifiant, il sert à faciliter les opérations de compression en empêchant les particules de superabsorbant et de cellulose microcristalline d'adhérer aux poinçons de la comprimeuse et en aidant à l'éjection des comprimés hors des matrices par réduction des forces de friction.

L'utilisation d'excipients, dans les proportions pondérales envisagées dans les documents précités, présente l'inconvénient majeur d'augmenter notablement le volume de matière soumise aux opérations de compression. Or, le choix des dimensions des comprimés est nécessairement limité par le diamètre de la sortie de vidange. Aussi, plus les comprimés ont une teneur élevée en excipients, plus grand est le risque que la quantité de superabsorbant introduite dans les poches soit insuffisante, compte tenu du volume de matières liquides susceptible d'être recueilli dans ces poches, pour assurer une gélification de ces dernières.

Il en résulte que l'utilisation d'excipients, pourtant censée rendre les comprimés de superabsorbant plus performants, constitue en fait un frein à une véritable efficacité de ces comprimés.

Or, dans le cadre de leurs travaux, les Inventeurs ont constaté avec étonnement qu'en utilisant un superabsorbant convenablement sélectionné, non seulement il est possible de compresser ce superabsorbant en l'absence de tout excipient et, donc, d'obtenir des comprimés constitués uniquement de superabsorbant, mais que, de plus, les comprimés ainsi obtenus, bien qu'exempts d'excipient, ne sont pas sujets au phénomène de *"gel blocking"*.

La présente invention a donc pour objet un comprimé, caractérisé en ce qu'il comprend un polymère superabsorbant pulvérulent ayant une masse volumique inférieure ou égale à 5.10² kg/m³ et un temps de prise en gel inférieur à 6 secondes.

Sur la base de leurs observations, les Inventeurs ont en effet mis en évidence que la masse volumique d'un superabsorbant est un paramètre déterminant de son aptitude à être compressé, tandis que son temps de prise en gel conditionne son aptitude à présenter, lorsqu'il est sous forme compressée, une capacité d'absorption très proche de celle qu'il présente avant compression, et qu'il convient d'utiliser un superabsorbant ayant à la fois une masse volumique au plus égale à 5.10² kg/m³ et un temps de prise en gel inférieur à 6 secondes si l'on veut obtenir des comprimés de superabsorbant qui soient aptes à remplir pleinement leur rôle et ce, sans recourir à un quelconque excipient.

Dans ce qui précède et ce qui suit, les valeurs de masse volumique indiquées sont celles que l'on obtient en déterminant la masse volumique d'un superabsorbant selon la norme NFT 51-003, tandis que les valeurs de temps de prise en gel correspondent aux valeurs obtenues après dispersion de 3 g de superabsorbant dans 100 ml d'une solution aqueuse comprenant 9 g/l de chlorure de sodium et présentant une température de 20 ± 1°C.

Selon une première disposition avantageuse de l'invention, le polymère superabsorbant est un polyacrylate de sodium ou de calcium réticulé. Parmi ce type de polymères, on préfère notamment utiliser le polyacrylate de sodium commercialisé par la Société ELF ATOCHEM sous la marque Norsocryl® , référence 99EX007, qui présente le double avantage d'avoir une masse volumique d'environ 4,2.10² kg/m³ et un temps de prise en gel d'environ 4 secondes.

Selon une autre disposition avantageuse de l'invention, le comprimé est exempt d'excipient, ce qui permet, non seulement de réduire au maximum son volume et, donc, ses dimensions en fonction de la capacité d'absorption recherchée, mais de le fabriquer sans avoir à procéder, préalablement aux opérations de compression, à une quelconque opération de mélange.

Toutefois, conformément à l'invention, le comprimé peut également comprendre un ou plusieurs excipients, sous réserve qu'ils soient présents en quantité limitée, c'est-à-dire en pratique qu'ils ne représentent pas plus de 20% et, idéalement, pas plus de 15% en poids du poids du comprimé.

Ainsi, le comprimé peut notamment comprendre :
. un agent lubrifiant s'il se révèle nécessaire ou souhaitable de faciliter les opérations de compression, soit par une action anti-adhérente, soit par une action anti-friction, soit encore par une action régulatrice de l'écoulement des particules de superabsorbant dans les matrices de la comprimeuse ;
. un agent diluant à haute compressibilité dans le cas où l'on souhaite augmenter sa cohésion et sa dureté,
. un agent désintégrant si l'on désire augmenter la vitesse de pénétration, dans le comprimé, de la phase liquide des matières devant être épaissies ;
. un parfum destiné à masquer les odeurs des matières à épaissir, ou encore
. un colorant propre à conférer au comprimé un coloris particulier, que ce soit en vue d'agrémenter sa présentation ou pour éviter toute confusion avec d'autres comprimés.

L'utilisation d'un polymère superabsorbant répondant aux critères précédemment définis s'est révélée conduire à l'obtention de comprimés présentant une cohésion et une dureté suffisamment élevées pour résister convenablement aux chocs qu'ils sont susceptibles de subir, notamment au cours des opérations de conditionnement et de stockage faisant suite à leur fabrication.

Aussi, conformément à l'invention, le comprimé est de préférence un comprimé nu de manière, là également, à simplifier au maximum son procédé de fabrication. Toutefois, on peut très bien envisager de l'enrober d'une fine pellicule continue ou discontinue destinée à le protéger contre les chocs ou l'humidité, ou à lui donner un aspect particulièrement attrayant, auquel cas cette pellicule est de préférence composée d'un agent d'enrobage apte à se dissoudre rapidement dans l'eau.

Selon encore une autre disposition avantageuse de l'invention, le comprimé est muni d'une ou plusieurs rainures de sécabilité. Cette disposition présente en effet l'avantage de permettre aux patients d'ajuster la quantité de superabsorbant à la taille des poches de recueil qu'ils utilisent et/ou au volume des matières recueillies dans ces poches entre deux vidanges.

Selon une disposition préférée de l'invention, le comprimé a, lorsqu'il est placé dans une solution aqueuse comprenant 9 g/l de chlorure de sodium et présentant une température de 24 ± 1°C, une capacité d'absorption une capacité d'absorption au moins égale à 25 fois et, de préférence comprise entre 30 et 45 fois le volume qu'il présente à l'état sec.

Le comprimé conforme à l'invention peut présenter différentes formes : il peut notamment être à section circulaire, rectangulaire, hexagonale, avec des faces planes ou convexes de courbures identiques ou différentes, ou encore être sphérique ou de forme ovoïde. Ses dimensions sont également susceptibles d'être très différentes en fonction de sa destination ; ainsi, pour une utilisation dans des poches de recueil d'excrétions corporelles, ces dimensions sont principalement choisies en fonction de la taille de l'ouverture des poches par laquelle il est susceptible d'être introduit (nez de poche ou sortie de vidange selon le cas) ainsi que de la taille des poches et, partant, du volume de matières susceptible d'être recueilli dans ces dernières.

Conformément à l'invention, le comprimé est avantageusement fabriqué par compression directe, c'est-à-dire par un procédé qui consiste à compresser directement la poudre de polymère superabsorbant, seule ou préalablement mélangée avec le ou les excipients dans le cas où le comprimé est prévu pour contenir un ou plusieurs excipients, sous la forme de comprimés prêts à être conditionnés. Un tel procédé est de loin, de par le nombre très réduit d'opérations qu'il met en jeu et d'appareillages qu'il exige, le procédé de fabrication de comprimés le plus économique.

Compte tenu de sa sensibilité à l'humidité, le comprimé est, de préférence, conditionné dans des emballages individuels étanches à l'air et à l'eau, comme par exemple des sachets formés d'une feuille d'aluminium doublée d'un film de polyéthylène.

Le comprimé conforme à l'invention présente de nombreux avantages et, notamment, ceux :
. de présenter un rapport capacité d'absorption/volume à l'état sec substantiellement supérieur à celui présenté par les comprimés de superabsorbant proposés dans l'état de la technique,
. d'être en conséquence susceptible, pour une capacité d'absorption au moins équivalente à celle de ces derniers, de présenter des dimensions plus faibles que celles des comprimés de l'état de la technique, et d'être ainsi plus facile à manipuler et, en particulier, à introduire dans des poches de recueil d'excrétions corporelles,
. de présenter, par ailleurs, une cohésion et une dureté suffisamment élevées pour résister convenablement aux chocs,
. de n'entraîner aucune augmentation de volume des matières liquides au cours de la prise en gel, et
. d'être enfin apte à être fabriqué par un procédé extrêmement simple à mettre en oeuvre et économiquement très attractif.

Eu égard à ce qui précède, le comprimé conforme à l'invention est particulièrement bien adapté à un usage dans le domaine du recueil des excrétions corporelles.

La présente invention a, donc également, pour objet l'utilisation d'un comprimé tel que précédemment défini pour gélifier les matières liquides susceptibles d'être recueillies dans une poche de recueil d'excrétions corporelles, ainsi qu'une poche de recueil d'excrétions corporelles qui comprend un tel comprimé. Sont notamment susceptibles d'être munies d'un tel comprimé, les poches d'iléostomie, les poches d'urostomie et les poches de drainage et ce, qu'il s'agisse de poches pour adultes ou de poches pédiatriques.

Il est bien entendu toutefois que le comprimé conforme à l'invention peut également trouver des applications dans de nombreux autres domaines où une gélification de matières liquides peut être recherchée comme dans la fabrication de couches pour bébés ou d'articles d'hygiène féminine.

L'invention sera bien comprise par le complément de description qui suit et qui se réfère à un exemple de réalisation de comprimés conformes à l'invention.

Il va de soi toutefois que cet exemple n'est donné qu'à titre d'illustration de l'invention et n'en constitue en aucune manière une limitation.

### EXEMPLE : PREPARATION DE COMPRIMES CONFORMES A L'INVENTION DESTINES A DES POCHES D'ILEOSTOMIE

On prépare des comprimés à section circulaire et à faces planes, mesurant 32 mm de diamètre sur 7,5 ± 0,5 mm d'épaisseur et contenant uniquement un polymère superabsorbant en soumettant du Norsocryl® 99EX007 à une compression directe au moyen d'une comprimeuse FROGERAIS® type alternative numéro 1. La pression exercée sur les matrices de la comprimeuse est de 1,5.10⁵ Mpa.

Les comprimés ainsi préparés renferment chacun 6,5 g de polymère superabsorbant et présentent une dureté supérieure à 196,2 N.

Leur capacité d'absorption est appréciée en plaçant un comprimé au fond d'un bécher et en déterminant le volume d'une solution aqueuse à 9 g/l de NaCl et présentant une température de 24 ± 1°C qu'il convient d'ajouter au bécher pour transformer totalement ce comprimé en un gel. Ce test ayant été conduit plusieurs fois, le volume de solution permettant d'obtenir la transformation totale du comprimé en un gel s'est révélée être en moyenne de 225 ml, ce qui correspond à une capacité d'absorption d'environ 37 fois le volume à l'état sec (6,0375 ml) dudit comprimé.

Par ailleurs, des tests consistant à placer un comprimé dans un bécher rempli d'un volume prédéterminé (par exemple 200 ml) d'une solution aqueuse à 9 g/l de NaCl et présentant une température de 24 ± 1°C et à comparer ce volume avant et après gélification montre qu'il n'est pas modifié par la prise en gel.

## Revendications

1. Comprimé, **caractérisé en ce qu'**il comprend un polymère superabsorbant pulvérulent ayant une masse volumique inférieure ou égale à 5.10² kg/m³ et ainsi qu'un temps de prise en gel inférieur à 6 secondes.

2. Comprimé selon la revendication 1, **caractérisé en ce que** le polymère superabsorbant est un polyacrylate de sodium ou de calcium réticulé.

3. Comprimé selon la revendication 2, **caractérisé en ce que** le polymère superabsorbant est un polyacrylate de sodium réticulé qui présente une densité volumique d'environ 4,2.10² kg/m³ et un temps de prise en gel d'environ 4 secondes.

4. Comprimé selon l'une quelconque des revendications précédentes, **caractérisé en ce qu'**il est exempt de tout excipient.

5. Comprimé selon l'une quelconque des revendications précédentes, **caractérisé en ce qu'**il est un comprimé nu.

6. Comprimé selon l'une quelconque des revendications précédentes, **caractérisé en ce qu'**il comprend une ou plusieurs rainures de sécabilité.

7. Comprimé selon l'une quelconque des revendications précédentes, **caractérisé en ce qu'**il présente, lorsqu'il est placé dans une solution aqueuse comprenant 9 g/l de chlorure de sodium et présentant une température de 24 ± 1°C, une capacité d'absorption au moins égale à 25 fois et, de préférence comprise entre 30 et 45 fois son volume à l'état sec.

8. Comprimé selon l'une quelconque des revendications précédentes, **caractérisé en ce qu'**il est fabriqué par compression directe.

9. Utilisation d'un comprimé selon l'une quelconque des revendications 1 à 8 pour gélifier les matières liquides susceptibles d'être présentes dans une poche de recueil d'excrétions corporelles.

10. Poche de recueil d'excrétions corporelles, **caractérisée en ce qu'**elle comprend un comprimé selon l'une quelconque des revendications 1 à 8.
